# EUROPEAN PATENT APPLICATION

(11) **EP 2 808 356 A1**
(43) Date of publication of application: **03.12.2014**
(21) Application number: 13169389.7
(22) Date of filing: 27.05.2013
(51) Int. Cl.: C08J 3/12

(54) **Method for the generation of semi-crystalline hybrid particles by liquid-solid assembly**

(71) Applicant: Henkel AG & Co. KGaA, 40589 Düsseldorf (DE); Max-Planck-Gesellschaft zur Förderung der Wissenschaften e.V., 80539 München (DE)
(72) Inventor: Taden, Andreas, 40597 Düsseldorf (DE); Zhang, Yang, 40233 Düsseldorf (DE); Landfester, Katharina, 55122 Mainz (DE)
(74) Representative: Peters, Frank M.

(57) **Abstract**

The present invention relates to a method for the production of hybrid micro- or nanoparticles with raspberry-shaped or core/shell-shaped morphology, the method including:
(a) providing an aqueous dispersion of core micro- or nanoparticles of a first material selected from organic polymers and inorganic materials, wherein the micro- or nanoparticles are stabilized and bear a surface charge;
(b) adding a stabilized miniemulsion of droplets of one or more second polymer-forming monomers in water to form structured droplet-particle hybrids in a liquid-solid assembly process, wherein said droplets bear a surface charge that is opposite to the charge of the core micro- or nanoparticles of a first polymer; and
(c) polymerizing the polymer film-forming monomers to obtain a stable dispersion of raspberry-shaped or core/shell-shaped hybrid micro- or nanoparticles.

Also encompassed are the thus produced hybrid particles, methods of forming films using these hybrid particles and the thus obtained composite films and their use.

## Description

The present invention relates to a method for the production of semi-crystalline hybrid particles containing polyacrylonitrile (PAN) by liquid-solid assembly as well as the thus produced hybrid particles, methods of forming films using these hybrid particles and the thus obtained composite films.

Polyacrylonitrile (PAN) homopolymer has been used in various applications, such as carbon materials, fibers, membranes and engineering plastics due to its highly semi-crystalline feature. However, the fast crystallization of PAN during polymerization has made it difficult to obtain colloidally stable PAN aqueous dispersions. Moreover, PAN decomposes before melting and possesses a high *T_{g}* (around 125 °C), which makes it even more difficult to obtain thin film materials from PAN. To obtain film materials acrylonitrile is usually copolymerized with other monomers. However, the crystallinity of the copolymer decreases significantly compared to acrylonitrile homopolymer.

In the last two decades, research on structured hybrid nano- and micro-particles, including core/shell-shaped, raspberry-shaped, hollow, and many other asymmetric morphologies, has gained considerable attention due to their promising properties. Among these morphologies, raspberry-shaped particles have attracted plenty of attention because of their wide application potentials, such as filler carriers, functional coatings, nano-sensors, and the like. Self-assembly is a commonly used method to prepare raspberry-shaped particles. The key factor for preparation is the driving force to bind core and shell particles, including covalent and non-covalent forces. To create covalent bonds, various reactions between the surfaces of core and shell particles have been used, including epoxy-amine reaction, heterocoagulated pyridinium reaction, and copolymerization of vinyl groups amongst others. To generate non-covalent interactions, various physical forces have been utilized, including electrostatic interaction, hydrogen-bonding, and acid-base interaction. Based on these interactions, a number of approaches have been developed, which can be summarized into the following three basic types:
Approach 1: Both core and shell particles are synthesized beforehand, which after mixing form self-assembled structures through heterocoagulation processes. The driving force for this assembly is usually based on non-covalent interactions, especially electrostatic interaction. For example, nanosilica particles have been successfully assembled on the surface of polyelectrolyte surface-modified polystyrene (PS) latex particles through electrostatic adsorption. For successful assembly, the particle size difference between core and shell particles needs to be controlled in a proper range.
Approach 2: Solid particles are utilized as pickering "surfactant" or stabilizer for emulsions, which leads to the formation of raspberry-shaped particles after reaction within the emulsion droplets. For instance, a series of raspberry-shaped hybrid particles through the polymerization of a variety of monomer miniemulsions using nanosilica as surfactant have been synthesized. The preparation of colloidal silica armored polystyrene latex particles based on the use of nanosilica as the pickering emulsifier for monomer miniemulsion before radical polymerization has also been reported. A series of polymer/SiO₂ hybrid particles with raspberry shape have been fabricated through soap-free polymerization with 20 nm silica nanoparticles as "particulate" dispersant.
Approach 3: Shell particles are synthesized in the dispersion of core particles through the reactions of liquid precursors dissolved or dispersed inside. In this approach, surface functionalization of core particles is necessary to offer attractive forces for the in-situ formed shell particles. Gold nanoparticle coated polystyrene (PS) raspberry-shaped particles have been synthesized through in-situ reduction of HAuCl₄ in purified PS dispersion. It has further been demonstrated that silica nanoparticles produced by in-situ sol-gel process in poly(acrylic acid) (PAA) functionalized PS latex can be adsorbed onto PS beads through hydrogen bonding between PAA in PS beads and silica particles. Moreover, the radiation miniemulsion polymerization technique has been used to produce raspberry-shaped silica/PS particles based on the phase-separation between hydrophobic styrene and slightly hydrophobically modified silica in miniemulsion droplets.

To date it has not been possible to provide acrylonitrile homopolymer due to the above mentioned problems. Further, also the known techniques for the production of hybrid nano- and microparticles have so far been unsuccessful.

The present invention is based on the inventors' finding that the problems connected to providing acrylonitrile homopolymer can be solved by creating raspberry-shaped or core/shell-shaped hybrid particles with semi-crystalline polyacrylonitrile (PAN) as core and film-formable polymer encapsulating the core by a novel, facile method to prepare colloidally stable, structured semi-crystalline hybrid nanoparticles, said method relying on the combination of approaches 1 and 3.

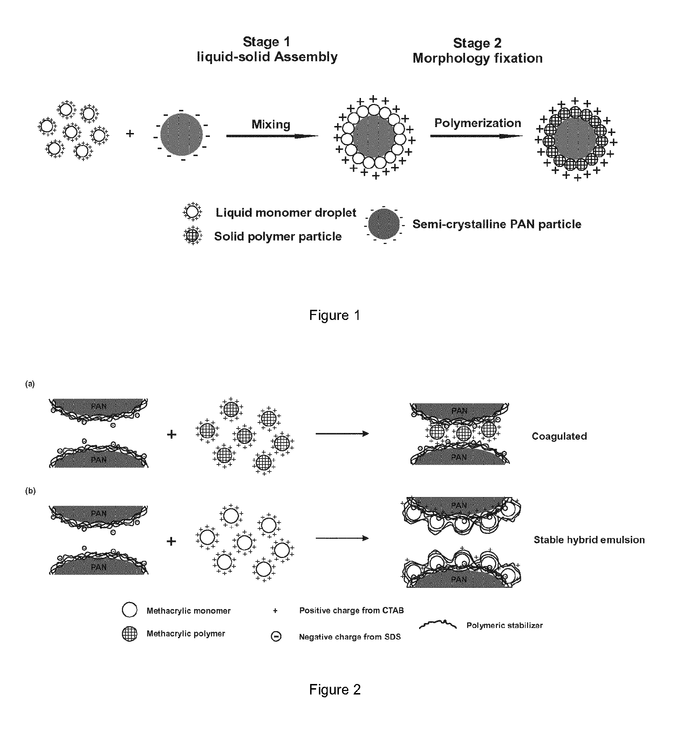

A schematic demonstration of the detailed synthesis route for structured semi-crystalline hybrid nanoparticles is illustrated in Figure 1. The depicted preparation can be described as a two stage process. The first step is the assembly of the liquid miniemulsion droplets with solid particles driven by electrostatic interactions. The second step can be considered as morphology fixation due to polymerization. The inventive method involves the utilization of liquid miniemulsion monomer droplets as the precursor of shell materials, rather than solid particles or a soluble precursor, which can be seen as independent nanoreactors. The strategy adopted by the method described herein possesses three major advantages: (1) the synthesis is fast and easy to control, because there is no need for pre-treatment of building blocks before assembly; (2) it is easier to maintain the colloidal stability during assembly by using liquid droplets rather than solid particles, because rearrangement of surfactant molecules on the surface of droplets can take place more easily. This consequently can lead to a decreased surface charge density of droplets adsorbed on PAN and reduce the possibility of further coagulation; (3) the chemical composition of hybrid particles can be easily varied over a wide range and allows a high degree of freedom to tailor the overall hybrid dispersion properties, which is attributed to the use of miniemulsion monomer droplets.

In a first aspect, the present invention thus relates to a method for the generation of hybrid micro-or nanoparticles with raspberry-shaped or core/shell-shaped morphology, the method including:
(a) providing an aqueous dispersion of core micro- or nanoparticles of a first material selected from an organic polymer and an inorganic material, wherein the micro- or nanoparticles are stabilized and bear a surface charge;
(b) adding a stabilized miniemulsion of droplets of one or more second polymer-forming monomers in water to form structured droplet-particle hybrids in a liquid-solid assembly process, wherein said droplets bear a surface charge that is opposite to the charge of the core micro- or nanoparticles of a first polymer;
(c) polymerizing the polymer film-forming monomers to obtain a stable dispersion of raspberry-shaped or core/shell-shaped hybrid micro- or nanoparticles.

In various embodiments, step (a) comprises
(i) providing a stabilized miniemulsion of one or more first polymer-forming monomers in an aqueous solvent,
(ii) adding a charged surfactant as a stabilizer to the miniemulsion according to (i); and
(iii) polymerizing the one or more second polymer-forming monomers to obtain a micro- or nanoparticle dispersion.

In preferred embodiments, the method relates to the generation of semi-crystalline hybrid micro- or nanoparticles with raspberry-shaped or core/shell-shaped morphology and comprises:
(a) preparing a semi-crystalline polyacrylonitrile micro- or nanoparticle dispersion by
   (i) providing a stabilized miniemulsion of acrylonitrile monomer in an aqueous solvent,
   (ii) adding a negatively charged surfactant as a stabilizer to the miniemulsion according to (i); and
   (iii) polymerizing the acrylonitrile monomers by radical polymerization to obtain a semi-crystalline polyacrylonitrile micro- or nanoparticle dispersion;
(b) adding a stabilized miniemulsion of positively charged droplets of one or more second polymer-forming monomers in water to form structured droplet-particle hybrids in a liquid-solid assembly process; and
(c) polymerizing the polymer film-forming monomers by addition of a water-soluble polymerization initiator to obtain a stable dispersion of raspberry-shaped or core/shell-shaped hybrid semi-crystalline micro- or nanoparticles.

In various embodiments, the second polymer-forming monomers are polymer-film forming monomers.

Another aspect of the invention relates to the hybrid micro- or nanoparticles obtainable according to the methods described herein, in particular stable dispersions containing said hybrid micro- or nanoparticles.

In still another aspect, the present invention also encompasses a method of forming a composite film from the micro- or nanoparticle dispersions described herein, the method comprising applying a dispersion of the hybrid micro- or nanoparticles described herein to a carrier material; and drying the dispersion to obtain a continuous composite film.

In a still further aspect, the invention also relates to the films thus obtained.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more.

"About", as used herein, relates to ± 20 %, preferably ± 10 % of the numerical value to which it refers. "About 200" thus relates to 200 ± 40, preferably 200 ± 20.

In the following, the invention is described in greater detail by reference to a concrete embodiment, namely a hybrid nanoparticles having a polyacrylonitrile core. It is however understood that the present invention is not limited to such an embodiment, but can easily be adapted to use other core materials, stabilizers, and particle sizes. Such alternative embodiments are also encompassed by the scope of the instant invention. Exemplary core materials include, but are not limited to other organic polymers and inorganic materials, such as silica and/or clay minerals.

To synthesize structured semi-crystalline hybrid particles, a stable acrylonitrile homopolymer dispersion has to be prepared first. Due to the insolubility of PAN in its own monomer, an effect of strong intermolecular interaction, it is usually difficult to obtain colloidally stable homopolymerized acrylonitrile. It was however found that miniemulsion polymerization with a stabilizer to stabilize the monomer-containing droplets is a direct and convenient method to generate pure PAN particles possessing semi-crystalline property. As suitable stabilizers surfactants, such as sodium dodecyl sulfate (SDS), may be used. Alternatively, other compounds that have hydrophobic and hydrophilic moieties may be used as stabilizers. It is however necessary to endow the formed particles with a negative charge to facilitate the liquid-solid assembly process that involves electrostatic attraction in the next step.

In various embodiments of the described method, a stabilized miniemulsion of acrylonitrile monomer in water is provided by means of a suitable stabilizer, such as those comprising hydrophobic and hydrophilic moieties described above. Suitable are, for example, polar polymers that have been hydrophobically modified. In various embodiments of the methods described herein, amorphous polyvinyl alcohol (PVA), in particular hydrophobically modified PVA, has been used as a stabilizer for acrylonitrile monomer miniemulsions rather than SDS to obtain semi-crystalline particles with a particle size of about 200 nm.

After the preparation of stabilized miniemulsions, the resulting miniemulsion droplets have to be endowed with negative surface charges. To achieve those, anionic surfactants may be added, such as alkylsulfates or other known anionic surfactants.

In various embodiments of the described methods, after the preparation of PVA stabilized acrylonitrile miniemulsion, SDS was added to endow droplets with negative surface charges and post-stabilize the miniemulsion during free radical polymerization. It has been found that the colloidal stability of as-prepared PAN dispersion has been improved significantly by using PVA and SDS together as stabilizer, compared to SDS solely, especially at higher solid contents (> 20 wt%). Without wishing to be bound to a specific scientific hypothesis, it is currently believed that SDS is buried inside the thin PVA layer in water/PAN interface, which leads to a comparably low ζ-potential value.

The thus produced PAN nanoparticles have been found to be semi-crystalline in that they crystallize partially (around 25 %).

In all above described embodiments, the stabilizers and/or surfactants may be provided in form of an aqueous solution to which a solution of the acrylonitrile monomer in an organic solvent is added or, alternatively, which is added to a reaction mixture containing the monomer and water.

The stabilized miniemulsion droplets are then polymerized, usually by radical polymerization, using a suitable initiator. Readily usable initiators are preferably thermally activatable and are preferably selected from radical initiators. Exemplary radical initiators may be organic azo or peroxo compounds. Suitable radical initiators are widely known in the art and readily available. The radical initiators may be water-soluble, in which case they are added directly before the polymerization step, or essentially water-immiscible in which case they are already added to the monomer before formation of the miniemulsion. For acrylonitrile monomer polymerization, preferably water-immiscible radical initiators are used which are premixed with the monomers before the miniemulsion is formed.

"Water-immiscible", as used in relation to a compound herein, refers to the property that a water-immiscible liquid has a saturation concentration of water in said liquid at 25°C of no more than 5 wt.-%. With reference to a solid compound, it means that the saturation concentration of said compound in water at a pH of 7 and a temperature of 25°C is no greater than 10⁻⁶ mol/l.

Formation of the miniemulsions described herein is achieved by combining the monomers in liquid form, for example in form of a solution in an organic solvent, and water in the presence of a stabilizer or surfactant under the action of a shear force, for example by a high-pressure homogenizer having an energy input in the range of from 10³ to 10⁵ J per second per liter of the emulsion. The shear force can also be brought about by means of ultrasound, the ultrasonic treatment preferably occurring at 10 to 60 kHz and for no longer than 300 seconds, with an initial output power of the ultrasound source that produces a heating of at least 1 °C, but no more than 10°C of the volumes combined at a mixing temperature of 25°C. The term "miniemulsion" or "emulsion", as used herein, relates to oil-in-water (O/W) emulsions, i.e. emulsions in which water is used in excess and is the continuous medium. In miniemulsion system, coalescence and Ostwald ripening may be suppressed due to the presence of a stabilizer (which may be a surfactant) and optionally co-stabilizer, for example a co-surfactant. Suitable stabilizers include, by way of example only, ultrahydrophobes. By this process, stable droplets are then obtained, which have typically a size between 50 and 500 nm. Miniemulsion-based processes are, therefore, particularly adapted for the generation of nanomaterials. There is a fundamental difference between traditional emulsion polymerisation and a miniemulsion polymerisation, since particle formation in the former is a mixture of micellar and homogenous nucleation, particles formed via miniemulsion however are mainly formed by droplet nucleation.

The above-described process yields a stable dispersion of semi-crystalline polyacrylonitrile micro-or nanoparticles in a water-based continuous medium. The surface of the polyacrylonitrile (PAN) particles is negatively charged due to the adsorption of negatively charged surfactant molecules to the particle surface. The dispersion is stable in that it does not form agglomerates over prolonged storage periods.

To form the structured semi-crystalline hybrid nanoparticles, liquid miniemulsion droplets rather than solid latex particles are used as building blocks for assembly processes to obtain structured hybrid particles. To achieve this, the stable dispersion of semi-crystalline polyacrylonitrile micro- or nanoparticles in a water-based continuous medium prepared according to the above-described process is combined with liquid miniemulsion droplets of one or more second polymer-forming monomers, preferably polymer-film forming monomers. Again, this miniemulsion is an O/W emulsion, i.e. the miniemulsion droplets are emulsified in water as the continuous medium.

The miniemulsion of the second polymer-forming monomers can be prepared similarly to the above-described process of generating a miniemulsion of acrylonitrile monomer in water. Again, the presence of a stabilizer, preferably a surfactant is required and the emulsifying is achieved by application of shear force. The stabilizer/surfactant used for preparation of the polymer film-forming monomer miniemulsion preferably has a positive net charge to yield droplets with an opposite charge to the PAN particles. Alternatively, the stabilizer/surfactant may have a negative net charge, in which case the PAN particles will have to be prepared with a cationic surfactant. It is crucial that the polymer film-forming miniemulsion droplets and the PAN nanoparticles have opposite charges, as the final hybrid particle formation is based on electrostatic interactions between the particles and the droplets.

It is further an essential feature of the present invention that the second polymer that forms the raspberry-shaped surface structures or the shell is provided in form of a miniemulsion of the unpolymerized monomer and that polymerization is only effected after the liquid-solid assembly process that yields the micro- or nanoparticles.

In various embodiments of the present invention, the one or more monomers forming the second polymer, e.g. the polymer film, are selected from ethylenically unsaturated organic compounds, epoxies, blocked isocyanates, oxetanes, and/or benzoxazines, particularly preferably selected from ethylenically unsaturated organic compounds.

Monomers having or not having an acid group can be used in the water-in-oil emulsion according to the present invention as representatives of the organic ethylenically unsaturated organic compounds contained in a particularly preferred embodiment of the miniemulsion. Typical monomers based on ethylenically unsaturated compounds are maleic acid, methylmaleic acid, fumaric acid, and the respective acid esters thereof, (meth)acrylic acid and esters thereof, itaconic acid and esters thereof, as well as vinyl ethers, vinylphosphonic acid esters, and/or styrene, the acid esters and ethers being in each case selected by preference from esters and ethers of aliphatic alcohols having up to 20 carbon atoms, or esters and ethers of functionalized alcohols such as 3-methylbut-3-en-1-ol, 3-methyl-2-buten-1-ol, ethylene glycol, propylene glycol, butylene glycol, polyethylene glycol, polypropylene glycol, oxiran-2-ylmethanol, 3-hydroxypropanoic acid, 3-hydroxypropyltrimethoxysilane, 3-hydroxypropyltriethoxysilane, 2-hydroxyethyl-N-imidazole, 2-hydroxyethyl-N-pyrrolidone, 2-hydroxyethyl-N-morpholine, and 2-hydroxyethyl-N-piperidine, 2-hydroxyethyl-N-oxazolidone.

In preferred embodiments, the one or more second polymer-forming monomers comprise (meth)acrylic acid or (meth)acrylate monomers, preferably alkyl (meth)acrylates, i.e. (meth)acrylate alkyl esters, more preferably alkyl methacrylates. The methacrylate alkyl esters may include esters of methacrylic acid with aliphatic C₁-C₁₂ alcohols. Exemplary esters suitable for use according to the present invention are, without limitation, methyl methacrylate (MMA), 2-ethylhexyl methacrylate (EHMA), laurylmethacrylate (LMA) and mixtures thereof.

If reference is made herein to the acid forms of the monomers, it is understood that alternatively the salts may be used and vice versa. For example, instead of methacrylic acid, the respective methacrylate salts could be used and vice versa. Further, (meth)acrylates represent a preferred embodiment of the second polymer-forming monomers. All reference to methacrylates made herein should be understood as exemplary only and it is understood that the respective acrylates could be used instead.

The one or more second polymer-forming monomers may include at least one crosslinking monomer that serves the purpose to crosslink the polymer chains made of the other monomers. If (meth)acrylates are used as polymer-forming monomers, the crosslinking monomer is preferably an acrylate having two vinyl groups, preferably a (meth)acrylate diester, more preferably ethylene glycol di(meth)acrylate. In case such a crosslinker is used, its concentration may be from 0,1 to 2 wt.-%, preferably above 0,25 wt.-% based on the total weight of all second polymer-forming monomers.

The miniemulsion droplets of the second polymer-forming monomers are preferably positively charged. The charge may be endowed to the droplets by means of a stabilizer or surfactant that bears a positive net charge and is adhered or otherwise associated with the droplet surface, i.e. the interface between droplet and continuous phase. The positively charged stabilizer/surfactant is preferably a quaternary ammonium salt, more preferably cetyltrimethylammonium bromide.

The combination of the stabilized miniemulsion and the core polymer particle dispersion may be done by mixing the two at room temperature while stirring. The structured droplet-particle hybrids are formed in a liquid-solid self-assembly process, which is driven by the electrostatic attraction between the droplets and the particles. The inventors have surprisingly found that only by using the second polymer in form of non-polymerized miniemulsion droplets, coagulation can be avoided. In contrast, use of the second polymer in polymerized, i.e. particle form, led to coagulation and did not yield a stable dispersion of hybrid nanoparticles. Without wishing to be bound to any particular theory, it is believed that these differences can be attributed to the higher mobility of the charged stabilizer/surfactant molecules at the surface of the droplets. This concept will be explained in greater detail in the examples section below.

The term "stabilizer", as used herein in relation to the particles or miniemulsion droplets, relates to a class of molecules that can stabilize the particles/droplets in a dispersion or emulsion, i.e. prevent coagulation or coalescence. The stabilizer molecules may adhere to or associate with the particle or droplet surface. In various embodiments the stabilizer molecules comprise a hydrophilic and a hydrophobic part, with the hydrophobic part interacting with the particle/droplet and the hydrophilic part be exposed to the solvent. The stabilizers may be surfactants and may bear an electric charge, with the charge being selected such that it provides for electrostatic attraction between core particles and shell droplets. Exemplary stabilizers used herein include hydrophobically modified polyvinyl alcohol, sodium dodecyl sulfate and cetytrimethylammonium bromide. Alternative stabilizers/surfactants that may also be used in the presently described methods are known to those skilled in the art and include for example other known surfactants or hydrophobically modified polar polymers. These include so-called "protective colloids", i.e. water-soluble or water-dispersible polymers that can provide for colloidal stability. Typical examples besides polyvinyl alcohol (PVA) and its derivatives include polyethyleneimides, such as those commercially available under the trademark "Lupasole" from BASF, and polyvinyl pyrrolidone and its derivatives.

The ζ-potential is a scientific term for electrokinetic potential in colloidal systems, more specifically the electric potential in the interfacial double layer (DL) at the location of the slipping plane versus a point in the bulk fluid away from the interface. In other words, the ζ-potential is the potential difference between the dispersion medium and the stationary layer of fluid attached to the dispersed particle. The significance of zeta potential is that its value can be related to the stability of colloidal dispersions. The zeta potential indicates the degree of repulsion between adjacent, similarly charged particles in a dispersion. For molecules and particles that are small enough, a high zeta potential will confer stability, i.e., the solution or dispersion will resist aggregation.

In various embodiments of the present methods, the ξ-potential of the micro- or nanoparticles of the core, i.e. the first polymer used in step (a), is below +0 mV, preferably in the range of -1 to -20 mV. In such embodiments, the ξ-potential of the miniemulsion droplets of step (b) is at least +17 mV, preferably at least +20 mV, but can be higher, such as at least +50 mV or more. Alternatively, the charges may be inversed.

It has further been found that the glass transition temperature T_{g} of the monomers in the miniemulsion droplets affects the morphology of the formed hybrid particles. If the glass transition temperature T_{g} is low, the droplets adhered to the surface of the core particle coalesce and form a shell, while in case the glass transition temperature T_{g} is higher, they remain distinct droplets and thus form a raspberry-shaped morphology. More specifically, a T_{g} of the one or more second polymer- forming monomers in the range of about 40 to 100 °C leads to a raspberry-shaped hybrid micro- or nanoparticle morphology, while a T_{g} lower than about 40°C, for example in the range of about -60 to below 40°C or about 0 to below 40°C, yields a core/shell-shaped hybrid micro- or nanoparticle morphology. Generally, the T_{g} of the one or more second polymer- forming monomers can be in the range of about -60 to about 100 °C.

In the methods described herein, the hybrid particles formed may be micro- or nanoparticles. Generally, the term "nanoparticles", as used herein, refers to particles with a size, i.e. diameter in their greatest dimension, below 1 µm, preferably in the range of 100 to 700 nm. Similarly, the term "microparticles", relates to particles with sizes of 1 µm or more, preferably up to about 1000 µm. Also contemplated are even larger particles, in particular in case the core material is an inorganic material, such as a clay mineral, for example particle sizes of 100µm - 2 mm in at least two dimensions. It is however preferred that the particles are nanoparticles, as they provide for more stable dispersions.

In various embodiments of the described methods, the core micro- or nanoparticles have a particle diameter of 100-300 nm, preferably about 200 nm. The miniemulsion droplets may, for example, have a diameter of 30 to 500 nm. The diameter, as used in this context, refers to the diameter in the greatest dimension in case the particles/droplets are not spherical. It is however preferred that the particles and droplets have an essentially spherical form as long as they are separate from each other. Once the droplets are associated with the particle surface, they are usually no longer spherical but may approximate hemispherical forms.

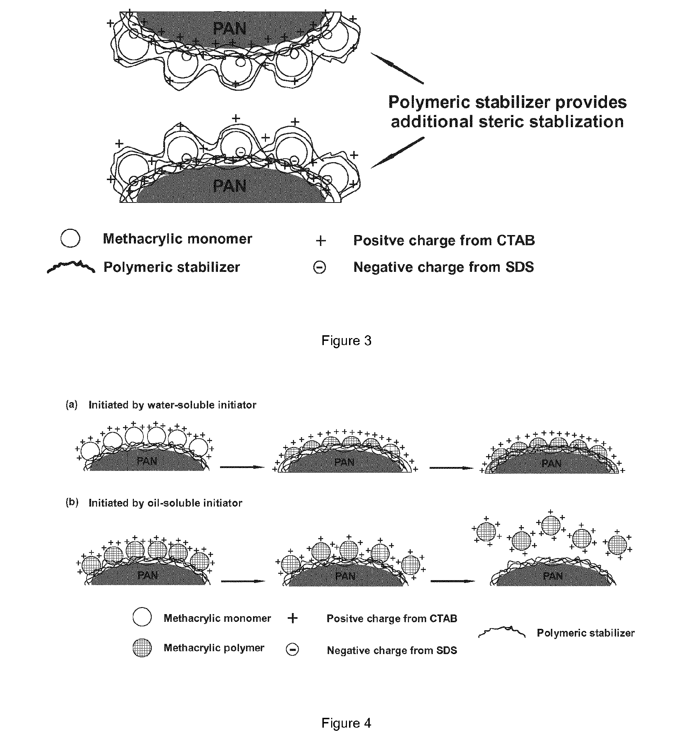

The polymerization of the second polymer-forming monomers is carried out by the appropriate polymerization process. In case ethylenically unsaturated monomers are used, they can be polymerized by radical polymerization, as described in connection with the core polymer particles above. For this purpose, polymerization initiators can be used, such as those described above.It has been found that the choice of the initiator for radical polymerization of adsorbed miniemulsion droplets is of key importance to the successful preparation of raspberry-shaped particles in the described system. While water-soluble initiators, such as V-50 [2,2'-azobis (2-methylpropionamidine)], result in raspberry-shaped particles, oil-soluble initiators, such as V-59 [2,2'-Azobis (2-methylbutylonitrile)], induce the formation of agglomerated particles "glued" by soft second polymer. While the exact cause for this phenomenon is still unclear, it is assumed that this behavior is related to the initiation site of polymerization, as illustrated in Figure 4 which shows schematic diagrams comparing the influences of oil-soluble and water-soluble initiators on the morphology of derived PAN-methacrylic copolymer hybrid particles. When the polymerization is initiated by water-soluble initiator, free radicals generate in aqueous phase first and diffuse to water/monomer interface to initiate the polymerization inside droplets. It means that monomers in water/monomer interface are initiated earlier than in particle/droplet interface. Therefore, monomers have enough time to diffuse into the stabilizer/surfactant layer covering the particle before being polymerized. After the completion of polymerization, polymers formed in the stabilizer/surfactant layer can enhance the fixation of raspberry-shaped morphology. On the contrary, when oil-soluble initiator is utilized to initiate radical polymerization, polymerization starts inside the droplets, which means the monomer in the particle/droplet interface also polymerizes much faster than in the case of water-soluble initiator. The fast build-up of molecular weight can lead to desorption of droplets from the surface of the particle due to decreased compatibility between the formed polymer and the stabilizer/surfactant on the particle surface, in particular the modified PVA. In the meantime, the stabilizer/surfactant, e.g. CTAB, concentration on the surface of droplets is expected to decrease significantly, because considerable amount of stabilizer/surfactant (CTAB) can be dragged to the surface of the particle, e.g. PAN particle, due to electrostatic attraction. Therefore, droplets begin to coalesce and lose spherical shape.

Accordingly, it is preferred that the polymerization of the monomer droplets is effected by radical polymerization using a water-soluble initiator.

Pure PAN nanoparticles cannot form a continuous film, due to its semi-crystalline property and high *T*_{g}. However, soft methacrylic polymers in structured hybrid particles can bind semi-crystalline PAN nanoparticles together to form continuous composite films after drying. A pure PAN dispersion leads to the formation of a thin layer of white powder rather than a film, while a continuous coating layer can be generated through the drying of a hybrid dispersion as described herein (The content of PAN is 30 wt % based on total weight of dry coating). As-prepared composite films possess semi-crystalline feature, due to the embedment of semi-crystalline PAN particles. The content of crystalline regions can be simply tuned by the ratio of PAN and methacrylic polymer. In addition, the film embedded with 30 wt% PAN still shows certain transparency, which is because of the formation of raspberry-shaped structure.

In one aspect, the present invention thus relates to the formation of a continuous film comprising the hybrid micro- or nanoparticles prepared according to the methods described herein. Such a method may comprise applying a dispersion of the hybrid micro- or nanoparticles as described herein to a carrier material or substrate and drying the dispersion to obtain a continuous composite film. The drying can be carried out by all means known to those skilled in the art and routinely employed in this field.

As-prepared hybrid semi-crystalline particles or films formed thereof have potential applications like barrier materials for moisture and oxygen, or high performance functional coatings.

In a preferred embodiment, the present invention thus relates to a one-pot, two-step approach to produce semi-crystalline hybrid particles with raspberry-shaped and core/shell-shaped morphology. Colloidal stable PAN particles have been successfully synthesized by miniemulsion polymerization with amorphous PVA and SDS as stabilizers. Liquid-solid assembly of strongly positive charged CTAB stabilized methacrylic monomer miniemulsion droplets and weakly negative charged PAN particles leads to the formation of structured droplet-particle hybrids. With subsequent morphology fixation by polymerization, hybrid semi-crystalline particles are obtained. On the contrary, solid-solid assembly of CTAB stabilized methacrylic polymer particles and PAN particles leads to serious coagulation. Raspberry-shaped and core/shell-shaped semi-crystalline particles can be simply prepared by using methacrylic copolymers with different *T*_{g} respectively.

### Examples

*Materials:* Acrylonitrile (AN), methyl methacrylate (MMA), 2-ethylhexyl methacrylate (EHMA), lauryl methacrylate (LMA), ethylene glycol dimethacrylate (EGDMA), and cetyltrimethylammonium bromide (CTAB) were purchased from Sigma-Aldrich. Hexadecane (HD) was provided by Merck. Lutensol AT 25 [Chemical formula is RO(CH₂CH₂O)₂₅H, R is linear, saturated C16-C18 fatty alcohol] and sodium dodecyl sulfate (SDS) were purchased from BASF. Hydrophobically modified polyvinyl alcohol (PVA) OKS-8041 was provided by Nippon Gohsei. 2,2'-Azobis (2-methylbutylonitrile) (V-59) and 2,2'-azobis (2-methylpropionamidine) (V-50) were purchased from Wako Chemicals. All chemicals were of reagent grade and used as received without further purification.

*Preparation of semi-crystalline PAN dispersion:* Semi-crystalline PAN dispersion was synthesized by the following method: 18 g of acrylonitrile, 750 mg of hexadecane and 450 mg of V-59 were mixed uniformly and added into an aqueous solution containing 1.8 g of hydrophobically modified PVA in 91 g of water. After 2 min of magnetic stirring at 300 rpm, the mixture was sonicated under ice cooling for 2 min at 90% amplitude using a Branson 450 W sonifer and a 1/2" tip. Subsequently, 72 mg of SDS dissolved in 8 g of water were added into the as-prepared miniemulsion, which was then transferred to a round-bottom flask and placed in a 70 °C oil-bath under magnetic stirring with the speed of 400 rpm to initiate polymerization. The polymerization was completed in 4 h. The physicochemical properties if PAN nanoparticles were determined and are listed in Table 1.

**Table 1. Physicochemical properties of PAN nanoparticles**

| Z-average size [nm] | PDI | ζ-potential [mV] |
|---|---|---|
| 228 | 0.081 | - 3.15 |

*Preparation of methacrylic miniemulsions:* Methacrylic miniemulsions with different compositions and surface properties have been synthesized, the details of which are listed in Tables 2-5. A typical synthesis process is as follows: 6 g of methacrylic monomer were added into an aqueous surfactant solution containing certain amounts of CTAB and/or Lutensol AT25 and 24 g of water under magnetic stirring. The mixture was kept stirring for 2 min at 300 rpm. Subsequently, the miniemulsion was prepared through 2 min ultrasonication with 90% amplitude. All miniemulsions have been used for subsequent procedure immediately after miniemulsification.

**Table 2. ζ-potential of miniemulsions with varied CTAB/Lutensol AT25 ratios.**

| Entry | m_{CTAB}/_{mLutensol} AT25 | ζ - potential of miniemulsion [mV] | Stability of derived hybrid latex |
|---|---|---|---|
| ME-3 | 0 | - 0.6525 | Coagulated |
| ME-4 | 1/12.3 | + 12.3 | Coagulated |
| ME-5 | 1/5.67 | + 16.25 | Coagulated |
| ME-6 | 1/2 | + 20.5 | Stable |
| ME-1 | ∞ | + 69.8 | Stable |

**Table 3. Calculated T_{g} of shell polymer with different miniemulsion compositions.**

| Entry | MMA [%][a] | EHMA [%][a] | LMA [%][a] | Calculated T_{g} [°C][b] |
|---|---|---|---|---|
| ME-7 | 95 | - | 5 | 90 |
| ME-1 | 60 | 35 | 5 | 44 |
| ME-8 | 40 | 55 | 5 | 22 |
| ME-9 | 25 | 70 | 5 | 8 |

| | | | | |
|---|---|---|---|---|
| [a] Percentage is based on total weight of monomers. [b] Based on the Fox equation for ideal copolymerized systems. | | | | |

**Table 4. Formulations of methacrylic miniemulsions without crosslinker.**

| Entry | CTAB [g] | Lutensol AT25 [g] | MMA [g] | EHMA [g] | LMA [g] | V-59 [g] |
|---|---|---|---|---|---|---|
| ME-1 | 0.24 | - | 3.6 | 2.1 | 0.3 | - |
| ME-2 | 0.24 | - | 3.6 | 2.1 | 0.3 | 0.1 |
| ME-3 | - | 0.24 | 3.6 | 2.1 | 0.3 | - |
| ME-4 | 0.018 | 0.222 | 3.6 | 2.1 | 0.3 | - |
| ME-5 | 0.036 | 0.204 | 3.6 | 2.1 | 0.3 | - |
| ME-6 | 0.080 | 0.160 | 3.6 | 2.1 | 0.3 | - |
| ME-7 | 0.24 | - | 5.7 | - | 0.3 | - |
| ME-8 | 0.24 | - | 2.4 | 3.3 | 0.3 | - |
| ME-9 | 0.24 | - | 1.5 | 4.2 | 0.3 | - |

| | | | | | | |
|---|---|---|---|---|---|---|
| CTAB = cetyltrimethylammonium bromide; MMA = methyl methacrylate; EHMA = 2-ethylhexyl methacrylate; LMA = lauryl methacrylate. | | | | | | |

**Table 5. Formulations of methacrylic miniemulsions with crosslinker.**

| Entry | CTAB [g] | Monofunctional monomer [g][a] | EGDMA [g] |
|---|---|---|---|
| ME-10 | 0.24 | 5.9940 | 0.006 |
| ME-11 | 0.24 | 5.9985 | 0.015 |
| ME-12 | 0.24 | 5.9700 | 0.030 |
| ME-13 | 0.24 | 5.9400 | 0.060 |
| ME-14 | 0.24 | 5.8800 | 0.120 |

| | | | |
|---|---|---|---|
| [a] MMA, EHMA and LMA has been pre-mixed with the ratio of 60 : 35 : 5 (in weight) before use. EGDMA = ethylene glycol dimethacrylate | | | |

*Preparation of structured semi-crystalline hybrid nanoparticles:* To prepare semi-crystalline hybrid nanoparticles, 7.5 g of miniemulsion were weighed into a flask equipped with a magnetic stirrer. 10 g of PAN dispersion were added slowly into the flask at 300 rpm magnetic stirring and kept stirring for 30 min. Subsequently, the flask was heated in a 70 °C oil bath, initiator solution (0.025 g of V-50 dissolved in 1 g of water) was added to initiate polymerization and the reaction mixture maintained for 4 h at 70 °C. If the oil-soluble initiator V-59 was used instead of water-soluble V-50, it was directly dissolved in the monomer mixture before sonification. The nomenclature of as-prepared hybrid dispersion follows that of the miniemulsions, but with 'L' as initial rather than 'ME' (for example, hybrid dispersion derived from ME-1 is named as L-1, etc). In addition, L-15 has been prepared by blending 7.5 g of latex derived from ME-1 (polymerization condition same as described above for hybrid latex) with 10 g of PAN dispersion at room temperature, which was designed to compare liquid (methacrylic monomer droplet)-solid (PAN particle) and solid (methacrylic polymer particle)-solid (PAN particle) assembly.

It is expected that raspberry-shaped particles are formed immediately due to electrostatic attraction between the droplets and particles. The morphology was fixated by subsequent polymerization of droplets at 70 °C for 4h. Immediate coagulation was observed after adding a CTAB stabilized methacrylic polymer dispersion into PAN dispersion (L-15), while a stable hybrid dispersion has been obtained through polymerization of a mixture containing a PAN dispersion and a CTAB stabilized methacrylic monomer miniemulsion. The as-prepared hybrid dispersion could be stored for several months without sedimentation.

Without wishing to be bound to any particular theory, it is believed that the difference in colloidal stability is related to the mobility difference of CTAB on the surface of solid methacrylic polymer particles and liquid methacrylic monomer droplets. The mobility of CTAB is expected to be highly restricted on the surface of solid particles because of the partially embedment of CTAB's hydrophobic tails in the surface. Therefore, when positively charged methacrylic polymer particles are adsorbed onto negatively charged PAN, the surfaces of PAN/methacrylic polymer hybrid particles gain strong positive charges, which could attract other PAN particles to form coagulum, as shown in Figure 2a. In contrast, the mobility of CTAB is much higher on the surface of liquid droplet. Therefore, CTAB could be dragged from the water/droplet interfaces to PAN/droplet interfaces through electrostatic attraction, as schematically shown Figure 2b. Hence, CTAB concentration on the water/droplet interface of adsorbed droplets decreases after adsorption, which can avoid "bridging" due to weaker electrostatic attraction. Figure 2 shows a schematic explanation of the difference between blending methacrylic polymer dispersion (a) and liquid methacrylate miniemulsion (b) with PAN on the stability of derived hybrid emulsion/dispersions.

A decrease of miniemulsion droplets' ζ-potential has been observed after adsorption and polymerization. CTAB-stabilized miniemulsion droplets were strongly positive charged with the ζ-potential of + 69.8 mV. After adsorption onto PAN surfaces and polymerization, the ζ-potential of hybrid particles was found to decrease to only + 12.87 mV. Surprisingly, the dispersions of raspberry-shaped particles possessed excellent colloidal stability, because an emulsion/latex usually becomes instable when the ζ-potential is below ± 30 mV. Therefore, there should be an additional stabilization mechanism in the system, which is most likely steric stabilizing effect, as schematically shown in Figure 3. PVA could provide steric hindrance towards coagulation between particles, which co-stabilize hybrid particles, even the electrostatic repulsion from CTAB alone is not strong enough. Figure 3 shows a schematic representation of the stabilization of raspberry-shaped hybrid particles through both mechanisms: electrostatic repulsion from CTAB and steric hindrance from amorphous PVA.

SEM was used to investigate the morphology of hybrid particles. It was found that, after polymerization of methacrylate miniemulsion/PAN mixture, particles with crumpled surfaces disappeared. Instead, raspberry-shaped particles emerged. Small methacrylic polymer particles have covered the surface of the PAN particles. In addition, methacrylic polymer particles on the surface of PAN were not perfectly spherical, but rather deformed in the interfacial regions between PAN and methacrylic polymer particles. It is probably due to the coalescence between surface particles, as the temperature for polymerization is 70 °C, which is much higher than the calculated *T*_{g} of methacrylic copolymer (around 44 °C).

In the described approach, the driving force behind the formation of raspberry-shaped morphology is the electrostatic attraction between the solid PAN particles and liquid methacrylic monomer miniemulsion droplets. Therefore, the influence of the ζ-potential of liquid droplets on hybrid particles has been examined. Non-ionic surfactant Lutensol AT25 [Chemical formula is RO(CH₂CH₂O)₂₅H, R is linear, saturated C16~C18 fatty alcohol] has been used together with CTAB to tune the ζ-potential of miniemulsion droplets without changing droplet size, as shown in **Table 2.** The threshold ζ - potential of monomer miniemulsion for stable hybrid dispersions is around + 20 mV. When the ζ-potential of the miniemulsion droplet is high, the electrostatic attraction between PAN and droplets is so strong that the PAN/droplets mixture is formed quickly and maintain stable. Therefore, it is highly possible that the surface of PAN is coated by droplets in a short time before coagulation takes place, which can be seen as charge reversal process. In contrast, when the ζ-potential of the monomer droplet is too low, the attraction between PAN and droplets is so weak that the completion of charge reversal process is not fast enough to avoid coagulation. Additionally, SEM images have confirmed the formation of raspberry-shaped hybrid particles, even when the ζ-potential of the miniemulsion is only + 20.5 mV.

As shown in Figure 1, the formation of structured particles consists of two major stages: liquid-solid assembly and morphology fixation. While the assembly process is dominantly controlled by ζ - potential, morphology fixation is influenced by several other parameters, such as the initiation type as discussed in above. Another important parameter is the softness of the methacrylic polymer, which is determined by the *T*_{g}. Methyl methacrylate (MMA), 2-ethylhexyl methacylate (EHMA) and lauryl methacrylate (LMA) have been mixed at various ratios to achieve different theoretical *T*_{g}s from about 8 °C to 90 °C, as shown in Table 3, based on the Fox equation and with the assumption that all monomers copolymerize ideally. All other parameters were maintained the same.

It has been found that the morphology of hybrid particles changes from raspberry-shaped to core/shell-shaped with the decrease of *T*_{g} of methacrylic polymer. Rough PAN surfaces tend to reappear, which is due to the fast spreading of soft shell polymers on the silicon wafer during drying. Meanwhile, ζ - potential of hybrid particles decrease from around + 11 mV to + 7 mV.

Both the evolving morphology from raspberry-shaped to core/shell-shaped shaped and the decrease of ζ - potential can be attributed to an increasing coalescence between methacrylic droplets/particles on the surface of PAN with the decrease in *T*_{g} of methacrylic copolymer, which leads to the formation of a continuous shell. Coalescence between droplets/particles on the PAN particle surface is similar to coalescence between latex particles onto the substrate during drying, which is driven by capillary force and affected strongly by the mobility of polymer chains. However, as the coalescence rate of particles in water is much slower than in air, it is necessary to ensure that the *T*_{g} of shell polymers is low enough for sufficient coalesence. For example, a *T*_{g} of 44 °C is not low enough to form a continuous layer on PAN, which occurs only at 22 °C. Improved coalescence compensates the electrostatic repulsion which prevents further adsorption of particles, which leads to the increase of adsorption efficiency for droplets/particles onto PAN surface. Therefore, the average ζ - potential of hybrid dispersion decreases, because the decrease of free, non-adsorbed methacrylic particles, which possess strong positive charges.

The influence of crosslinking on the morphology and colloidal stability of hybrid semi-crystalline particles has also been investigated. Ethylene glycol dimethacrylate (EGDMA) has been used as a difunctional monomer to crosslink the shell particles. Detailed formulation is listed in **Table 5.** It is found that raspberry-shaped morphology has been retained when the crosslinker concentration is increased from 0.1 % to 2% (based on total weight of methacrylic monomers). The number of free, non-adsorbed particles is decreasing with the increase of crosslinking level. When the crosslinker concentration is as low as 0.1%, free particles are still visible, which is further confirmed by the similar ζ-potential value as compared to the sample without EGDMA. When more crosslinker is added up to 2%, free particles tend to be absent as detected by SEM. At the same time the ζ-potential of hybrid dispersion decreases from + 12.55 mV to around + 3 mV. It is expected that the difunctional property of EGDMA enables the binding of neighbor particles through interfacial reactions between particles on the PAN surface. This effect is similar to the decrease of the *T*_{g} of the methacrylic polymer, as described in section 2.2.4, which could balance the repulsion between adsorbed droplets/particles to boost the adsorption efficiency. Therefore, fewer free particles exist in the hybrid dispersion. Based on the results of SEM observation and ζ-potential measurement, encapsulation saturation takes place when the crosslinker concentration is above 0.25 wt%.

*The preparation of semi-crystalline films:* For better film quality, more concentrated PAN dispersion was synthesized following the same method described above, but with solid content of 22.3%. Hybrid dispersion with 30 wt% PAN (based on total weight of PAN and methacrylic polymer) has been synthesized with the procedure mentioned above with ME-1 as miniemulsion. Films were cast from as-prepared PAN and PAN/methacrylic hybrid dispersions on glass slides by 20 µm rod-coater and dried in an oven at 60 °C. Before film casting, glass slides were cleaned thoroughly with acetone.

*Characterization:* Particle size and ζ-potential of the latex particles were measured on a Nano-Zetasizer (Malvern Instruments, UK) at 25 °C. Before measurement, the latexes were diluted by deionized water and aqueous KCI solution (10⁻² M) respectively. A scanning electron microscopy (SEM) Zeiss Gemini 1530 (Carl Zeiss, Germany) was used to observe the morphology of latex particles. Crystallization of the polymers was investigated by X-ray diffraction (XRD) with a Philips Goniometer PW 1820 at a wavelength of 1.5418 A (Cu-Kα) on freeze-dried samples.

## Claims

1. Method for the generation of hybrid micro- or nanoparticles with raspberry-shaped or core/shell-shaped morphology, comprising:
(a) providing an aqueous dispersion of core micro- or nanoparticles of a first material selected from organic polymers and inorganic materials, wherein the micro- or nanoparticles are stabilized and bear a surface charge;
(b) adding a stabilized miniemulsion of droplets of one or more second polymer-forming monomers in water to form structured droplet-particle hybrids in a liquid-solid assembly process, wherein said droplets bear a surface charge that is opposite to the charge of the core micro- or nanoparticles of a first polymer;
(c) polymerizing the polymer film-forming monomers to obtain a stable dispersion of raspberry-shaped or core/shell-shaped hybrid micro- or nanoparticles.

2. The method according to claim 1, wherein step (a) comprises
(i) providing a stabilized miniemulsion of one or more first polymer-forming monomers in an aqueous solvent,
(ii) adding a charged surfactant as a stabilizer to the miniemulsion according to (i); and
(iii) polymerizing the one or more second polymer-forming monomers to obtain a micro- or nanoparticle dispersion.

3. The method according to claim 1 or 2, wherein the method is a method for the generation of semi-crystalline hybrid micro- or nanoparticles with raspberry-shaped or core/shell-shaped morphology and wherein the first polymer is polyacrylonitrile, the method comprising:
(a) preparing a semi-crystalline polyacrylonitrile micro- or nanoparticle dispersion by
(i) providing a stabilized miniemulsion of acrylonitrile monomer in an aqueous solvent,
(ii) adding a negatively charged surfactant as a stabilizer to the miniemulsion according to (i); and
(iii) polymerizing the acrylonitrile monomers by radical polymerization to obtain a semi-crystalline polyacrylonitrile micro- or nanoparticle dispersion;
(b) adding a stabilized miniemulsion of positively charged droplets of one or more second polymer film-forming monomers in water to form structured droplet-particle hybrids in a liquid-solid assembly process; and
(c) polymerizing the polymer film-forming monomers by addition of a water-soluble polymerization initiator to obtain a stable dispersion of raspberry-shaped or core/shell-shaped hybrid semi-crystalline micro- or nanoparticles.

4. The method according to claim 3, wherein the stabilized miniemulsion of acrylonitrile monomer comprises acrylonitrile monomer droplets stabilized by polyvinyl alcohol or a derivative thereof, preferably a hydrophobically modified polyvinyl alcohol.

5. The method according to claim 3 or 4, wherein the negatively charged surfactant is sodium dodecyl sulfate, preferably an aqueous solution of sodium dodecyl sulfate.

6. The method according to any one of claims 1 to 5, wherein the one or more second polymer-forming monomers comprise methacrylic acid or methacrylate monomers, preferably alkyl methacrylates, more preferably alkyl methacrylates selected from the group consisting of methyl methacrylate (MMA), 2-ethylhexyl methacrylate (EHMA), laurylmethacrylate (LMA) and mixtures thereof.

7. The method according to claim 6, wherein the one or more second polymer-forming monomers further comprises at least one crosslinking monomer, preferably a methacrylate diester, more preferably ethylene glycol dimethacrylate.

8. The method according to claim 7, wherein the crosslinker concentration is from 0,1 to 2 wt.-%, preferably above 0,25 wt.-% based on the total weight of the polymer film-forming monomers.

9. The method of any one of claims 1 to 8, wherein the positively charged droplets of one or more second polymer-forming monomers are stabilized by a positively charged stabilizer, preferably a quaternary ammonium salt, more preferably cetyltrimethylammonium bromide.

10. The method of any one of claims 1 to 9, wherein
(1) the ξ-potential of the micro- or nanoparticles of step (a) is below +0 mV, preferably in the range of -1 to -20 mV; and/or
(2) the ξ-potential of the miniemulsion droplets of step (b) is at least +17 mV, preferably at least +20 mV.

11. The method of any one of claims 1 to 10, wherein the T*_{g}* of the one or more second polymer-forming monomers is in the range of between -60 °C and 100 °C and is selected from the range of about 40 to 100 °C to obtain a raspberry-shaped hybrid micro- or nanoparticle morphology or the range of about -60 °C to below 40°C to obtain a core/shell-shaped hybrid micro- or nanoparticle morphology.

12. The method of any one of claims 1 to 11, wherein
(1) the core micro- or nanoparticles have an average particle diameter of 100-300 nm, preferably about 200 nm; and/or
(2) the miniemulsion droplets have an average diameter of 30 to 500 nm.

13. Hybrid micro- or nanoparticle with raspberry-shaped or core/shell-shaped morphology obtainable according to the method of any one of claims 1 to 12.

14. Method for the formation of a continuous composite film, comprising
(i) applying a dispersion of the hybrid micro- or nanoparticles according to claim 13 to a carrier material; and
(ii) drying the dispersion to obtain a continuous composite film.

15. Continuous composite film obtainable according to the method of claim 14.
